# EUROPEAN PATENT APPLICATION

(11) **EP 1 603 065 A1**
(43) Date of publication of application: **07.12.2005**
(21) Application number: 05104369.3
(22) Date of filing: 24.05.2005
(51) Int. Cl.: G06F 17/60

(54) **System and method for structuring and providing third-party issued employee compensation**

(30) Priority: 01.06.2004 US 856945
(71) Applicant: Citigroup Global Markets, Inc., New York, New York 10013 (US)
(72) Inventor: ORTNER, William, Scarsdale NY 10583-2240 (US)
(74) Representative: Johansson, Lars-Erik

(57) **Abstract**

The present invention relates to a method and system for structuring and providing employee compensation in the form of securities that are linked to the employer's equity but issued by a third party entity. The third-party issued securities allow the employer to avoid ongoing economic risks often associated with traditional employee compensation, provide employees with the same retention benefits as provided by traditional employee compensation, and provide the third-party entity with financial opportunities through the hedging of such third-party issued securities.

## Description

### BACKGROUND OF THE INVENTION

### Field of the Invention

The present invention relates to the field of employee options and compensation. More particularly, the present invention relates to a method and system for structuring employee compensation in the form of stock units and/or employee options that are linked to the employer's equity securities that are issued by a third party.

### Background

Companies often use conventional equity-linked compensation, such as traditional stock options, as a tool to entice potential employees and retain existing employees. In some businesses or industries, employees do expect to receive equity-linked compensation as part of their overall employee compensation. Companies can achieve a number of objectives with the conventional equity-linked compensation. One objective is to retain employees and/or align the employees with shareholders. Vesting provisions associated with equity-linked compensation provide incentives for employees to stay with a company, in lieu of forfeiting potentially valuable options. Another objective is the alignment of economic interests, wherein employees with options also have economic interests in the company that are aligned with those of the shareholders.

However, there are a number of drawbacks associated with a company offering conventional equity-linked compensation, such as traditional stock options. A first drawback is that traditional stock options offer employees tangible value only when they are in-the-money, and deep out-of-the money options will lose their retention power to the employees. A second drawback is that by granting employee stock options, the company has created an exposure to a rise in its share price that - if unhedged - can transfer wealth from the shareholders to the option holders when the options are in-the-money. Furthermore, as the price of the company's share rises and more options go-in-the-money, the company's cost of covering option exercises also rises. A third drawback is that through the use of the treasury stock method, the existence of employee stock options adds additional shares to the company's diluted EPS (earning per share) calculations, thereby creating accounting dilution. A fourth drawback is the influence of shareholder advisory groups that give recommendations on levels for equity-linked employee compensation, on the shareholders, which may make new share authorization beyond the limit set by such groups impossible.

### SUMMARY OF THE INVENTION

Thus, there exists a need for a method and system for structuring equity-linked employee compensation that are free from at least some of the aforementioned drawbacks. Accordingly, embodiments of the present invention seek to structure and provide employees of a company (i.e., the employer) employee compensation in the form of equity-linked financial securities that are issued and obligated by a third party entity and not by the company/employer. Such employee compensation can provide at least the following benefits: no ongoing economic risk and the elimination of the wealth transfer issue; no EPS dilution from treasury stock method accounting; ability to use vesting provisions to maintain retention benefits; employees are aligned with shareholders; deferred taxation for employees; not counted toward cap limits set by shareholder advisory groups; no shareholder approval required; and transparency to accounting treatment by fixing compensation expense as cash paid to the third party entity.

One embodiment of the present invention provides a method for an employer to provide compensation to an employee of the employer, comprising: the employer issuing at least one equity security; receiving financial proceeds from the employer; and in exchange for the received financial proceeds, issuing a first security to the employee, the first security is not issued by the employer but linked to the employer's equity.

Another embodiment of the present invention provides a structure for providing an employee compensation comprising: at least one equity security unit issued by an employer; a first option linked to the at least one equity security unit and issued by a third party to an employee of the employer; and proceeds provided by the employer to the third party for the issued first option.

Still another embodiment of the present invention provides a system for an employer to structure a compensation to an employee of the employer, comprising: a first server maintained by an employer; a second server maintained by a third party; the first server comprising a first computer-readable medium on which is encoded at least one programming module having program code; the second server comprising a second computer-readable medium on which is encoded at least one programming module having program code; a first programming module stored on the first computer-readable medium, for receiving input data to issue at least one equity security unit; a second programming module stored on the first computer-readable medium, for receiving and storing parameters for a first option to purchase the at least one equity security unit to the employee; and a third programming module stored on the second computer-readable medium, for generating and issuing the first option.

### BRIEF DESCRIPTION OF THE DRAWINGS

The preferred embodiments are illustrated by way of example and not limited in the following figure(s), in which:

FIG. 1 depicts a high-level overview of the third-party issued, equity-linked financial securities structure in accordance with an embodiment of the present invention;

FIG. 2 depicts a process flow corresponding to the structure in FIG. 1, in accordance with an embodiment of the present invention;

FIG. 3 depicts a high-level overview of the third-party issued, equity-linked financial securities structure in accordance with an embodiment of the present invention;

FIG. 4 depicts a process flow corresponding to the structure in FIG. 3, in accordance with an embodiment of the present invention;

FIG. 5 depicts a system in which embodiments of the present invention can operate; and

FIG. 6 depicts sample screenshots of a user interface that can be used to modify and transfer third-party issued options.

### DETAILED DESCRIPTION OF THE INVENTION

Reference is now made in detail to embodiments of the present invention, some examples of which are illustrated in the accompanying drawings, in which like numerals indicate like elements, showing methods and systems for structuring and offering third-party-issued, equity-linked employee compensation.

### Product and Process

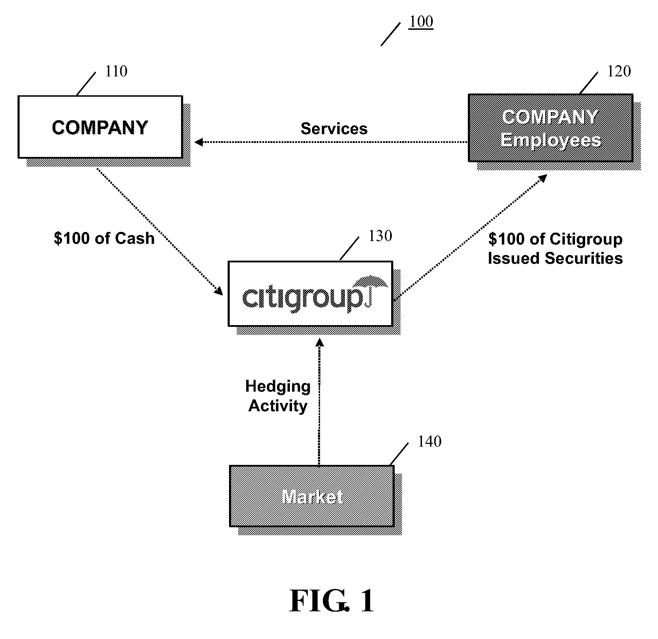

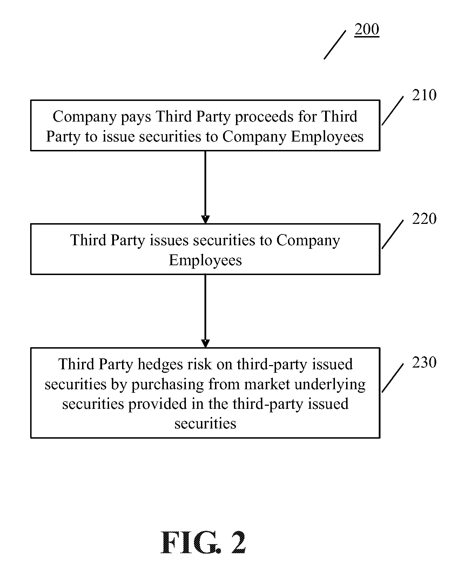

FIG. 1 depicts a high-level overview of the third-party issued, equity-linked financial securities structure 100 in accordance with an embodiment of the present invention. The structure 100 is further described below with reference to the process flow 200 shown in FIG. 2 for structuring and offering third-party issued, equity-linked financial securities to employees of a company.

Referring to FIG. 2, with reference to FIG. 1, the process 200 begins at 210 with the company 110 paying proceeds to a third-party (TP) entity 130 in return for the TP entity 130 issuing financial securities to the employees 120 of the company as part of the employee compensation in exchange for the employees' services with the company 110 and/or other benefits the employees 120 conveyed upon the company 110. For example, as shown in FIG. 1, the company 110 pays $100 in cash, stock, and/or other consideration as the proceeds to the TP entity 130 in exchange for the employees providing services to the company 110. The TP entity 130 can be a financial institution, like Citigroup, or any other suitable entity involved with the financial market.

At 220, the TP entity 130 issues financial securities to the company employees 120 in exchange for the proceeds it receives from the company 110. Thus, in the running example, the TP entity 130 issues $100 worth of financial securities to the company employees 120. The issued financial securities can comprise equity securities, options, and/or other options-based securities that are linked to an equity in the company 110. For example, the issued financial securities can be equity securities such as the stock units (e.g., shares) of the company 110 that have substantially identical terms and equity interest to and behave like stock that is actually issued by the company 110, with a major difference in that the TP entity 130, and not the company 110, is now obligated for the stock units. In another example, the issued financial securities can be equity-linked options that give the employees 120 the right to purchase from the TP entity 130 a predetermined number of the company's equity securities (e.g., the company's issued shares) at a specified future time and at a predetermined strike price that totals the proceeds paid out by the company 110 to the TP entity 130. Because the TP entity 130 is responsible for the issuance of the financial securities, the TP entity 130, and not the company 110, is now obligated for the issued financial securities.

In an alternative embodiment, the TP entity 130 can issue the financial options to the company 110 in exchange for the aforementioned proceeds, whereby the company 110 can then provide the third-party issued financial securities to the company employees 120 as part of the employee compensation.

At 230, the TP entity 130 can hedge its risk against the issued financial securities by buying and selling the underlying equity securities issued by the company 110 in the market 140 as understood in the art.

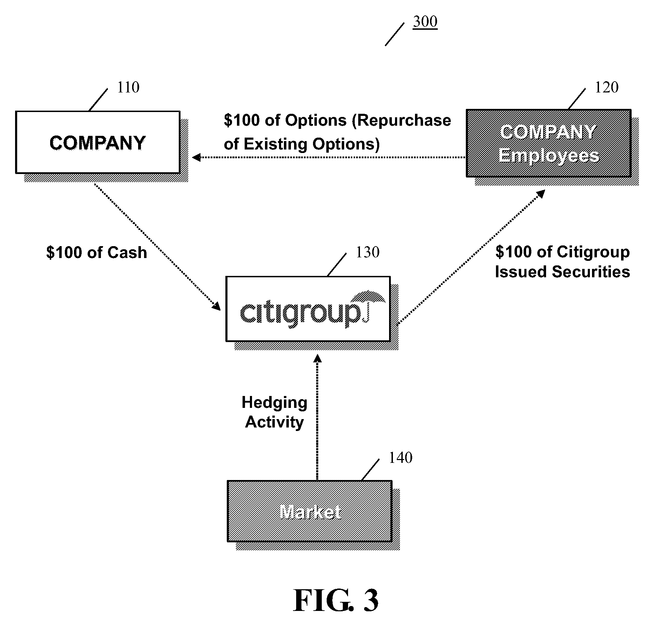

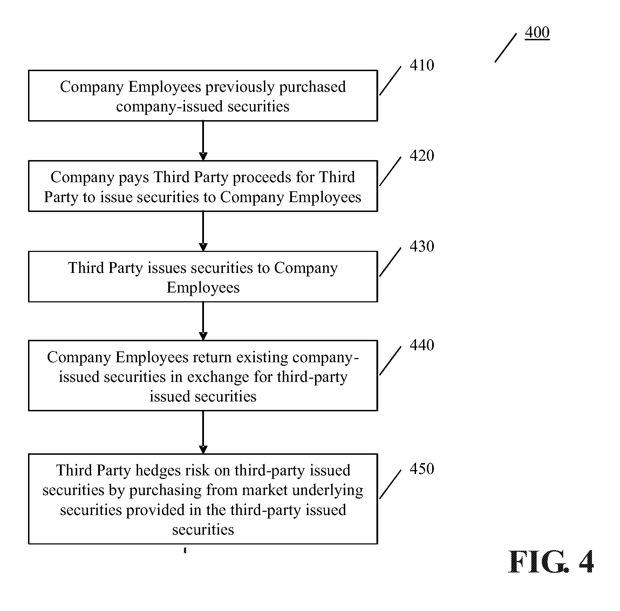

FIG. 3 depicts a high-level overview of the third-party issued, equity-linked financial securities structure 300 in accordance with another embodiment of the present invention. In this embodiment, third-party issued, equity-linked financial securities are also offered to the employees 120 of a company 110; however, they are used to exchange for existing compensation that are currently held by the employees 120 as previously issued by the company. The structure 300 in FIG. 3 for this embodiment is further described below with reference to the process flow 400 shown in FIG. 4.

Referring to FIG. 4, with reference to FIG. 3, the process 400 begins at 410 with the company employees 120 having previously received compensation, such as options, stocks, and/or other types of employee compensation, issued by the company 110.

At 420, the company 110 pays proceeds to a TP entity 130 in return for the TP entity 130 issuing financial securities to the employees 120 of the company. The third-party issued securities are used to buy back or exchange for the existing compensation previously issued by the company 110 and currently held by the employees 120. For example, as shown in FIG. 1, the company 110 pays $100 in cash, stock, and/or other considerations as the proceeds to the TP entity 130 in exchange for existing options held by the employees 120 as previously issued by the company 110.

At 430, the TP entity 130 issues financial securities to the company employees 120 in exchange for the proceeds it receives from the company 110. Thus, in the running example, the TP entity 130 issues $100 worth of financial securities to the company employees 120. Again, the issued financial securities can comprise equity securities, options, and/or other options-based securities that are linked to an equity in the company 110. For example, the issued financial securities can be equity securities such as stock units (e.g., shares) linked to the company's 110 stock that have substantially identical terms and equity interest to and behave like shares that are actually issued by the company 110, with a major difference in that the TP entity 130, and not the company 110, is now obligated for the stock units. In another example, the issued financial securities can be equity-linked options that give the employees 120 the right to purchase from the TP entity 130 a predetermined number of the company's equity securities (e.g., the company's issued shares) at a specified future time and at a predetermined strike price that totals the proceeds paid out by the company 110 to the TP entity 130. Because the TP entity 130 is responsible for the issuance of the financial securities, the TP entity 130, and not the company 110, is now obligated for the issued financial securities.

In an alternative embodiment, the TP entity 130 can issue the financial securities to the company 110 in exchange for the aforementioned proceeds, whereby the company 110 can use the third-party issued securities to repurchase the existing company-issued compensation from the employees 120 as described next.

At 440, the company employees 120 return the existing company-issued compensation to the company 110 in exchange for the third-party issued securities received from TP entity 130. Thus, the company 110 has effectively repurchased company-issued compensation with the third-party issued securities. It should be noted that the company 110 may provide its employees 120 with any suitable incentives for the employees 120 to trade out the company-issued compensation for the third-party issued securities.

At 450, the TP 130 can hedge its risk on the issued stock units by purchasing and selling other securities in the market 140 as understood in the art.

The characteristics and benefits of one embodiment of the aforementioned third-party issued, equity-linked employee compensation, the third-party issued options, are described below in accordance with such embodiment of the present invention.

First, compared to the cost of a third-party issued option or stock unit as described above, traditional options issued by the company 110 may be more expensive for two reasons:
1) when the company 110 issues traditional options and, at the same time, purchases the underlying securities provided in the options to hedge its risk stemming from such options, the company may no longer pay the dividends on the purchased securities, but it may be exposed to the risk of a declining price in the underlying securities; and
2) if the company 110 issues traditional options and subsequently purchases the underlying securities provided in the options at the time the options are exercised to satisfy the options, the company 110 is exposed to the risk of purchasing those securities at an appreciated price at such time.

Second, because the company 110 has shifted the obligations under the third-party issued options as described above to the TP entity 130, the company 110 also has shifted to the TP entity 130 any ongoing economic risk associated with the issued securities. Further, with no obligations under the third-party issued options, the company 110 can limit wealth transfer from the company's 110 shareholders to the employees 120 that could happen with traditional options because the company 110 would have to purchase the underlying securities from current shareholders at an appreciated price and transfer such securities to the employees.

Third, the third-party issued options are structured such that once the employees 120 are vested with the options, the company 110 is no longer a party to the options contract. Consequently, the third-party issued options should not contribute to any potential EPS dilution. Fourth, it further follows that the use of third-party issued options does not require shareholder approval because there is no potential issuance of securities.

Fifth, vesting provisions in third-party issued options can be designed to maintain retention benefits, i.e., contribute to employee retention. For example, vesting provisions of third-party issued options can include a requirement that an employee is vested with the options only after the employee has been employed by the company 110 for a predetermined period of time, e.g., three years. Separate vesting provisions can be applied to the transferability provision of the third-party issued options. For example, an employee's ability to transfer his/her third-party issued options to another party (e.g., the TP entity 130 or any other party) may occur four years after the grant, while the options may vest three years after grant. The separate transferability vesting feature of the third-party issued options can provide additional employee-retention benefits to the company 110 because employees may choose to remain at the company longer than with a standard option as they wait for the transferability vesting date, at which time they will realize higher proceeds than from a single exercise.

Sixth, because the third-party issued options remain linked to an equity in the company 110, the employees 120 with such options inherently have economic interests that are aligned with those of the shareholders.

Seventh, employees can defer taxes on the options until they exercise the options and resale the purchased underlying securities.

Eighth, the third-party issued options do not contribute to the cap limits that may have been set by shareholder advisory groups for equity-linked employee compensation because the company 110 neither issues the options nor is it obligated under such options.

Ninth, as shown in FIGs. 1 and 3, the structuring of third-party issued options brings transparency to the accounting treatment by fixing compensation expense as cash paid (e.g., $100) to the third-party entity 130. Further, the third-party issued securities can be structured so that they are considered equity instruments, as opposed to derivatives, under accounting rules and regulations. As equity instruments, the third-party issued securities do not need to be marked to market in the company's income statement.

Table 1 provides an example of a third-party issued option for an XYZ Company with a sample of terms that provide the aforementioned characteristics and benefits.

**Table I**

| | |
|---|---|
| Maturity date | June 1, 2014 |
| Strike Price | Average market price calculated by Citigroup from hedging the option issuance (purchasing XYZ shares) on June 1, 2004. |
| Vesting | Cliff vesting at June 1, 2007. If an employee terminates employment prior to June 1, 2007, the options revert back to XYZ. |
| Transferability | Between June 1, 2007 and June 1, 2009, an employee can elect to exercise the option. After June 1, 2009, the options become fully transferable. |
| Settlement | At inception and for options that revert back to XYZ, XYZ can elect gross physical settlement, net share settlement, or net cash settlement. The options require net cash settlement upon exercise by employees. |
| Adjustments | • Adjustments to the strike price for dividends declared by XYZ over the term. • Adjustments in a business combination to equalize the fair value of the options before and after the combination. • Adjustments to the strike price and/or number of shares for other corporate actions (for example, stock dividend, stock split, spin-off, rights offering, or recapitalization through a special large, nonrecurring dividend). |

### System Architecture

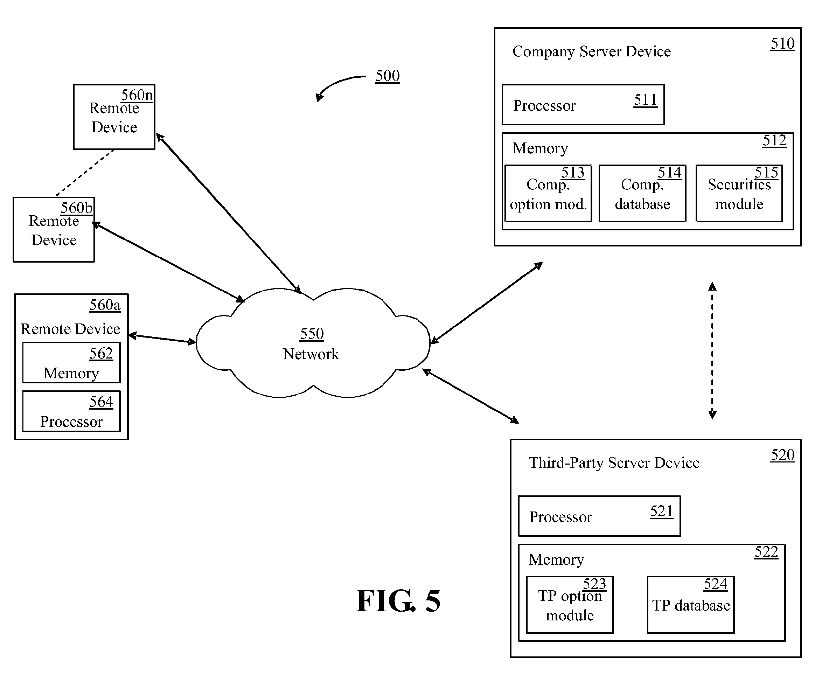

Various systems in accordance with the present invention may be constructed. FIG. 5 is a block diagram illustrating an exemplary system 500 in which embodiments of the present invention can operate. The present invention also may operate and be embodied in other systems.

As shown in FIG. 5, the system 500 includes a server device 510 maintained by the company 110 and a server device 520 maintained by the TP entity 130. The server devices 510 and 520 are in communication with each other directly (as shown by the dashed line) or through a network 550 so that components in one device can communicate with components in the other device. The network 550 can be a wired or wireless network. Further, it can be a public network, e.g., the Internet, or a private data network, e.g., a local area network (LAN) or a wide area network (WAN). Moreover, methods according to the present invention may operate within a single computer.

The server device 510 of the company 110 includes a processor 511 coupled to a memory device such as a computer-readable medium (CRM) 512. Likewise, the server device 520 of the TP entity 130 includes a processor 521 coupled to a memory device such as a CRM 522. Embodiments of computer-readable media include, but are not limited to, an electronic, optical, magnetic, or other storage or transmission device capable of providing a processor, such as the processors 511 and 521, with computer-readable instructions. Other examples of suitable media include, but are not limited to, a floppy disk, CD-ROM, DVD, magnetic disk, memory chip, ROM, RAM, an ASIC, a configured processor, all optical media, all magnetic tape or other magnetic media, or any other medium from which a computer processor can read instructions. Also, various other forms of computer-readable media may transmit or carry instructions to a computer, including a router, switch, private or public network, or other transmission device or channel, both wired and wireless.

Each of the server devices 510 and 520, depicted as a single computer system, may be implemented as a network of computers. Thus, the server devices 510 and 520 can be, e.g., mainframe computers, networked computers, processor-based devices, or any similar types of systems and devices. Further, each of the server processors 511 and 521 can include one or more processors of any of a number of computer processors, such as processors from Intel, Motorola, AMD, Cyrix. The processor 511 executes computer-executable program instructions stored in the server device 510, such as CRM 512, as program code to perform the methods described above. Likewise, the processor 521 executes computer-executable program instructions stored in the server device 520, such as CRM 522, as program code to perform the methods described above. The computer-executable program instructions may include code from any suitable computer-programming language, such as C, C++, C#, or the like.

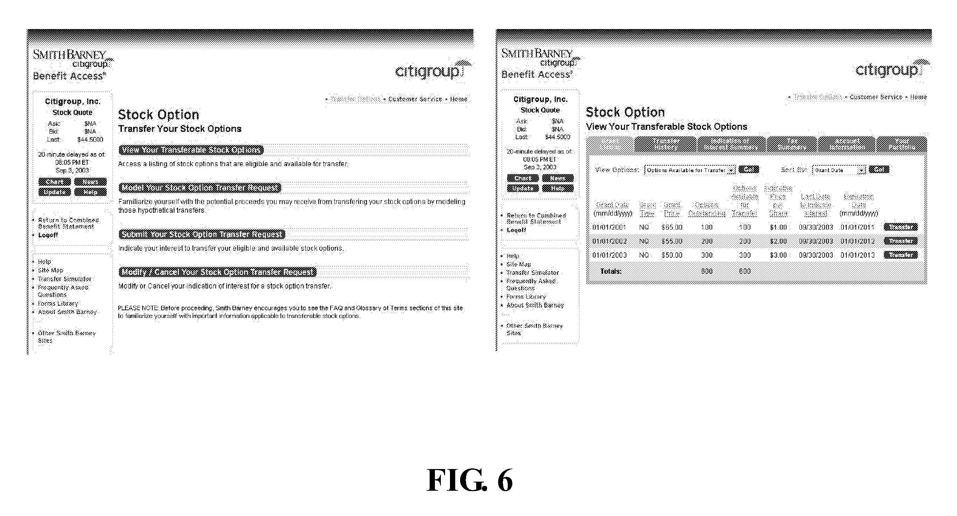

A number of programming routines or modules can be devised to include the aforementioned program codes for structuring and generating third-party issued financial securities as disclosed in or derived from the disclosure of the present invention. According to one embodiment of the present invention, a first programming module (hereinafter, "company securities module") 513 can be devised to have a securities template for generating an employee securities model on which third-party issued securities can be based; wherein the company securities module 513 can:
1) provide a user interface to employees 120 at remote devices 560a-n so as to: make available offerings of third-party issued securities, such as options and stock units, as employee compensation to the employees 120; enable the employees 120 to sign up for the third-party issued securities offered by the company 110; provide the employees 120 with information about third-party issued securities in which they are vested; and enable the employees 120 to exercise or transfer their third-party issued securities as shown, for example, in FIG. 6;
2) receive and store securities terms and parameters, such as those shown in Table 1, for a third-party issued security as desired and/or entered by the company 110 in a company database 514;
3) retrieve the aforementioned terms and parameters for its securities template so as to generate the employee securities model on which the third-party issued securities can be based. The company options module 513 can be stored in the CRM 512 or any other suitable memory device accessible by the company 110; and
4) communicate with the third-party server device 520 and various components therein as mentioned below for the second programming module.

Although FIG. 6 shows a user interface of a graphical type (e.g., , a GUI or graphical user interface), the user interface also can be a voice response system (e.g., an IVR or interactive voice response), and/or a multi-lingual call center, with which the employees 120 can communicate using a voice communication device, such as a telephone, or a text-to-voice device.

A second programming module (hereinafter, "TP-issued options module") 523 also can be devised to have a securities template for generating the actual third-party issued securities, such as options or stock units; wherein the TP-issued securities module 523 can:
1) communicate with the company securities module 513 to retrieve the company securities model, store the company securities model in a third party database 522, and/or generate third-party issued securities based on such model;
2) communicate with the company database 514 to retrieve stored terms and parameters for third-party issued securities as mentioned earlier, store such parameters in the third-party database 524, and/or generate third-party issued securities for the employees based on such parameters; and
3) provide a user interface to employees 120 at remote devices 560a-n so as to: make available offerings of third-party issued securities as employee compensation on behalf of the company 110; enable the employees 120 to sign up for the third-party securities offered; provide the employees 120 with information about third-party issued securities in which they are vested; and enable the employees 120 to exercise or transfer their third-party issued securities as shown, for example, in FIG. 6.

In the embodiment shown in FIG. 3, wherein the company 110 can repurchase existing company-issued securities by offering third-party issued securities, the TP securities module 523 can also provide a user interface to employees 120 at remote devices 560a-n that allows the employees 120 to perform such exchange. For example, an employee 120 can use a remote or client device 560a to access a user interface similar to the one shown in FIG. 6, except that the employee 120 is further provided with, or in lieu of, an option to perform an exchange wherein the employee 120 can be presented with information about both the existing company-issued securities and the new third-party issued securities. Further, the TP securities module 523 can receive the aforementioned company securities model that comprises information of the existing company-issued securities so that it can generate the third-party issued securities substantially identical or based on such model.

According to one embodiment of the present invention, a third programming module 515 also can be devised to include a securities template and resided on the company server device 510 so that it can be used by the company 110 to generate the underlying securities provided by the third-party issued securities.

Although the invention has been described with reference to these preferred embodiments, other embodiments could be made by those in the art to achieve the same or similar results. Variations and modifications of the present invention will be apparent to one skilled in the art based on this disclosure, and the present invention encompasses all such modifications and equivalents.

## Claims

1. A method for an employer to provide compensation to an employee of the employer, comprising:
the employer issuing at least one equity security;
receiving financial proceeds from the employer; and
in exchange for the received financial proceeds, issuing a first security to the employee, the first security is not issued by the employer but linked to the employer's equity.

2. The method of claim 1, further comprising the employee conferring a benefit on the employer; and
wherein the issuing the first security comprises a third party issuing the first security to the employee as compensation for the conferred benefit received by the employer.

3. The method of claim 2, wherein the employee conferring a benefit on the employer comprises the employee providing a service to the employer.

4. The method of claim 2, wherein the employee conferring a benefit on the employer comprises the employee providing a second security to the employer.

5. The method of claim 4, wherein the second security is an existing security issued by the employer.

6. The method of claim 1, wherein the first security comprises a first option to purchase the at least one equity security.

7. The method of claim 6, wherein the issuing the first security comprises:
receiving parameters for the first option from the employer; and
issuing to the employee the first option to purchase the at least one equity security in accordance with the received parameters.

8. The method of claim 1 wherein the first security comprises a stock unit linked to the employer's equity.

9. The method of claim 8, wherein the stock unit is substantially identical to the at least one equity security issued by the employer, and the stock unit is obligated by a third party.

10. The method of claim 4, wherein the second security comprises a second option issued by the employer to purchase the at least one equity security.

11. The method of claim 1, wherein the first security is transferable by the employee.

12. A structure for providing an employee compensation comprising:
at least one equity security unit issued by an employer;
a first option linked to the at least one equity security unit and issued by a third party to an employee of the employer; and
proceeds provided by the employer to the third party for the issued first option.

13. The structure of claim 12, wherein the first option comprises parameters provided by the employer.

14. The structure of claim 12, wherein the first option is issued by the third party to the employer for issuance to the employee.

15. The structure of claim 12, further comprising:
a second option linked to the at least one equity security unit and issued by the employer; and
a repurchase of the second option by the employer with the first option.

16. A system for an employer to structure a compensation to an employee of the employer, comprising:
a first server maintained by an employer;
a second server maintained by a third party;
the first server comprising a first computer-readable medium on which is encoded at least one programming module having program code;
the second server comprising a second computer-readable medium on which is encoded at least one programming module having program code.
a first programming module stored on the first computer-readable medium, for receiving input data to issue at least one equity security unit;
a second programming module stored on the first computer-readable medium, for receiving and storing parameters for a first option to purchase the at least one equity security unit to the employee;
a third programming module stored on the second computer-readable medium, for generating and issuing the first option.

17. The system of claim 16, wherein the third programming module is coupled to the second programming module to receive the parameters for the first option so as to generate and issue the first option based on the parameters.

18. The system of claim 16, wherein the second programming module is coupled to a remote access device over a communication set-up to display information about the first option, and receive input data from the remote access device to exercise or transfer the option.

19. The system of claim 16, further comprising a user interface created by the second programming module for receiving the input data from the remote access device.

20. The system of claim 16, wherein the second programming module is also for generating and issuing a second option to purchase the at least one equity security unit to the employee; and wherein the third programming module is coupled to the second programming module to receive the parameters for the second option so as to generate and issue the first option based on the parameters.
